# EUROPÄISCHE PATENTSCHRIFT

(11) **EP 4 440 797 B1**
(45) Veröffentlichungstag und Bekanntmachung des Hinweises auf die Patenterteilung: **25.06.2025**
(21) Anmeldenummer: 22814072.9
(22) Anmeldetag: 09.11.2022
(51) Int. Cl.: B25J 9/08, B25J 9/16, G05B 19/423

(54) **ROBOTERARM MIT EINEM ZUSATZABTRIEBSGLIED**
ROBOT ARM WITH AN ADDITIONAL OUTPUT LINK
BRAS DE ROBOT DOTÉ D'UNE LIAISON DE SORTIE SUPPLÉMENTAIRE

(30) Priorität: 29.11.2021 DE 102021131309
(43) Veröffentlichungstag der Anmeldung: 09.10.2024
(73) Patentinhaber: KUKA Deutschland GmbH, 86165 Augsburg (DE)
(72) Erfinder: RIEDEL, Martin, 86165 Augsburg (DE)
(86) Internationale Anmeldenummer: PCT/EP2022/081300
(87) Internationale Veröffentlichungsnummer: WO 2023/094161

(56) Entgegenhaltungen:
- EP-A1- 1 671 755
- WO-A1-2017/221171
- WO-A2-2015/078585
- CN-A- 114 670 241
- US-B2- 10 843 344

## Beschreibung

Die Erfindung betrifft einen Roboterarm mit mehreren Gelenken und mehreren Gliedern, die durch die Bewegungen der Gelenke des Roboterarms gegeneinander verstellbar sind, wobei jedem angetriebenen Gelenk eine Antriebsvorrichtung zugeordnet ist und die jeweilige Antriebsvorrichtung ausgebildet ist, das ihr zugeordnete Gelenk des Roboterarms zu verstellen und zwar durch jeweiliges automatisches Ansteuern eines Motors der jeweiligen Antriebsvorrichtung, aufweisend ein als Werkzeugflansch ausgebildetes distales Endglied, ein dem distalen Endglied in der kinematischen Kette der Gelenke und Glieder unmittelbar vorgelagertes Handglied, an dem das distale Endglied um eine Flanschdrehachse drehbar gelagert ist.

Die WO 2015/078585 A2 beschreibt einen Roboterarm mit wenigstens zwei gegeneinander beweglichen Armmodulen und wenigstens einem manuell betätigbaren Eingabemodul zur Generierung von Steuersignalen zur Steuerung des Roboterarms auf Grundlage einer Benutzereingabe, bei dem beide Armmodule eine erste Schnittstelle aufweisen, an der das Eingabemodul wahlweise montierbar ist.

Die EP 1 671 755 A1 beschreibt einen horizontal gelenkten Roboter mit einem oberen und unteren Endeffektor-Befestigungsteil. Dieser Roboter ist so konzipiert, dass er verschiedene Arbeitsformen und Werkstücke durch die selektive Nutzung der oberen und unteren Seiten einer Arbeitsspindel bewältigen kann.

Aufgabe der Erfindung ist es, einen Roboterarm zu schaffen, der einen erweiterten Nutzumfang aufweist.

Die Aufgabe wird gelöst durch einen Roboterarm mit mehreren Gelenken und mehreren Gliedern, die durch die Bewegungen der Gelenke des Roboterarms gegeneinander verstellbar sind, wobei jedem angetriebenen Gelenk eine Antriebsvorrichtung zugeordnet ist und die jeweilige Antriebsvorrichtung ausgebildet ist, das ihr zugeordnete Gelenk des Roboterarms zu verstellen und zwar durch jeweiliges automatisches Ansteuern eines Motors der jeweiligen Antriebsvorrichtung, aufweisend ein als Werkzeugflansch ausgebildetes distales Endglied, ein dem distalen Endglied in der kinematischen Kette der Gelenke und Glieder unmittelbar vorgelagertes Handglied, an dem das distale Endglied um eine Flanschdrehachse drehbar gelagert ist, sowie ein am Handglied um eine zur Flanschdrehachse parallelen Drehachse drehbar gelagertes Zusatzabtriebsglied, welches dem distalen Endglied gegenüberliegend am Handglied angeordnet ist, wobei dem distalen Endglied eine erste Antriebsvorrichtung zugeordnet ist, welche ausgebildet ist zum Bewegen des distalen Endglieds und dem Zusatzabtriebsglied (10) eine von der ersten Antriebsvorrichtung verschiedene zweite Antriebsvorrichtung zugeordnet ist, welche ausgebildet ist zum Bewegen des Zusatzabtriebsglieds.

Ein oder mehrere der Gelenke, insbesondere alle Gelenke des Roboterarms können als Drehgelenke ausgebildet sein. Jedes Glied des Roboterarms verbindet zwei benachbarte Gelenke des Roboterarms in einer festen relativen Zuordnung der Positionen und Orientierungen der benachbarte Gelenke zueinander. Jedes Glied des Roboterarms kann einteilig oder mehrteilig ausgeführt sein.

Die Antriebsvorrichtungen können von einer Robotersteuerung insbesondere wahlweise gemäß eines Roboterprogramms automatisiert oder in einem Handfahrbetrieb des Roboters manuell über eine Eingabevorrichtung betätigt antriebsgesteuert bzw. alternativ auch in einem kraft-/momentgeregelten Betrieb des Roboterarms durch manuelles Führen des Roboterarms durch Anfassen und Bewegen wenigstens eines seiner Glieder verstellbar sein. Die jeweilige Antriebsvorrichtung kann von einem ansteuerbaren Motor gebildet werden. Die jeweilige Antriebsvorrichtung kann insbesondere einen elektrischen Motor umfassen. Die Antriebsvorrichtung kann neben dem eigentlichen Motor zur Erzeugung eines Drehmoments, zusätzlich ein Getriebe und/oder eine Antriebssteuereinrichtung umfassen. Die Antriebsvorrichtung kann ausgebildet sein zu einem geregelten Betrieb des Motors. Dazu kann die Antriebsvorrichtung, insbesondere die Antriebssteuereinrichtung eine Regeleinrichtung, insbesondere eine elektrische Regeleinrichtung aufweisen.

Der Werkzeugflansch bildet ein Kopplungsmittel, an dem Roboterwerkzeuge, die durch den Roboterarm gehalten, bewegt, geführt und gegebenenfalls auch angesteuert werden, an dem Roboterarm befestigt werden können. Das Roboterwerkzeug kann beispielsweise ein Greifer sein, welcher ausgebildet ist zum Ergreifen eines Objektes, das durch Bewegen des Roboterarms gehandhabt werden soll. Alternativ kann das Roboterwerkzeug auch ein Bearbeitungswerkzeug sein, wie beispielsweise eine Schweißzange, ein sonstiges Werkzeug, insbesondere zur mechanischen Bearbeitung oder Handhabung eines Werkstücks. Der Werkzeugflansch kann insbesondere ein Flansch mit einem Flanschbild gemäß ISO 9409-1:2004-03 sein. Der Werkzeugflansch kann auch als mechanische Schnittstelle des Roboterarms bezeichnet werden.

Als distales Endglied wird dasjenige Glied des Roboterarms verstanden, welches in der kinematischen Kette der mehreren Glieder und Gelenke des Roboterarms von seiner Basis, dem Grundgestell, am weitesten entfernt ist. Insofern kann die Basis, d.h. das Grundgestell des Roboterarms auch als proximales Endglied bezeichnet werden. Die kinematische Kette der mehreren Glieder und Gelenke des Roboterarms wird üblicherweise ausgehend von der Basis, d.h. ausgehend von dem Grundgestell in Richtung des distalen Endglieds, d.h. dem Handflansch des Roboterarms aufgereiht bzw. gezählt. Insofern sind sämtliche der Basis bzw. dem Grundgestell folgende Glieder der Basis bzw. dem Grundgestell nachgelagert. Sämtliche vom distales Endglied, d.h. vom Handflansch des Roboterarms verschiedenen Glieder des Roboterarms sind insofern dem distalen Endglied bzw. dem Handflansch des Roboterarms vorgelagert. Das in der kinematischen Kette vorletzte Glied des Roboterarms ist dem distalen Endglied bzw. dem Handflansch des Roboterarms insoweit unmittelbar vorgelagert und bildet das Handglied. Im Falle eines Knickarmroboters mit einer kinematischen Kette von seriell abwechselnd aufeinander folgenden sieben Gliedern und sechs Gelenken, wird das dem distalen Endglied (siebtes Glied) bzw. dem Handflansch des Roboterarms unmittelbar vorgelagert Glied als sechstes Glied bezeichnet. Die Basis bzw. das Grundgestell des Roboterarms bildet insoweit das erste Glied des Roboterarms. Das in der kinematischen Kette vorletzte Glied des Roboterarms wird in diesem Fall also unmittelbar von dem fünften Gelenk verstellt und bildet das Handglied. Im Falle eines Knickarmroboters mit einer kinematischen Kette von seriell abwechselnd aufeinander folgenden acht Gliedern und sieben Gelenken, wird das dem distalen Endglied (achtes Glied) bzw. dem Handflansch des Roboterarms unmittelbar vorgelagert Glied als siebtes Glied bezeichnet. Die Basis bzw. das Grundgestell des Roboterarms bildet insoweit das erste Glied des Roboterarms. Das in der kinematischen Kette vorletzte Glied des Roboterarms wird in diesem Fall also unmittelbar von dem sechsten Gelenk verstellt und bildet das Handglied.

An dem Handglied ist das distale Endglied, das den Werkzeugflansch bildet, um seine Flanschdrehachse mittels eines Drehgelenks drehbar gelagert.

Das Handglied weist erfindungsgemäß ein um eine zur Flanschdrehachse parallelen Drehachse drehbar gelagertes Zusatzabtriebsglied auf, welches dem distalen Endglied gegenüberliegend am Handglied angeordnet ist.

Das Zusatzabtriebsglied ist ein vom Werkzeugflansch verschiedenes Abtriebsglied, welches an dem Handglied drehbar gelagert ist, und zwar drehbar um eine zur Flanschdrehachse parallelen Drehachse, und außerdem aktiv verstellbar, d.h. aktiv drehbar ist. Ein aktives Drehen des Zusatzabtriebsglieds kann durch einen dem Zusatzabtriebsglied eigens zugeordneten separaten Antrieb bzw. Motor erfolgen, oder durch einen der Antriebsvorrichtungen der Gelenke des Roboterarms, insbesondere durch diejenige Antriebsvorrichtung, welche den Werkzeugflansch antreibt und/oder das Handglied unmittelbar antreibt.

Der Roboterarm kann eine solche mechanische Konfiguration aufweisen, dass die Flanschdrehachse des Werkzeugflansches stets parallel zur Drehachse des Zusatzabtriebsglieds und/oder eines Handführungsmittels verläuft, insbesondere die Flanschdrehachse des Werkzeugflansches und die Drehachse des Zusatzabtriebsglieds bzw. des Handführungsmittels stets auf derselben Geraden liegen, und dabei eine Schwenkachse, um welche das Handglied an einem dem Handglied in der kinematischen Kette unmittelbar vorgelagerten Armglied des Roboterarms drehbar gelagert ist, stets senkrecht zur Flanschdrehachse des Werkzeugflansches und zur Drehachse des Zusatzabtriebsglieds bzw. des Handführungsmittels orientiert angeordnet ist.

Über das antreibbare Zusatzabtriebsglied kann ein Drehmoment auf ein mit dem Zusatzabtriebsglied gekoppeltes Funktionselement ausgeleitet werden. Ergänzend kann aufgrund der Koppelung von Zusatzabtriebsglied und Funktionselement auch ein Drehmoment über das Funktionselement hinweg auf das Zusatzabtriebsglied eingeleitet werden.

In einer ersten Ausgestaltung kann das Funktionselement eine manuelle Schnittstelle sein. Die manuelle Schnittstelle kann ein Handführungsmittel, insbesondere eine Handauflage und/oder einen Griff aufweisen. Mittels des Handführungsmittels, der Handauflage und/oder dem Griff kann ein Benutzer des Roboterarms das Handführungsmittel, die Handauflage und/oder den Griff anfassen bzw. umgreifen, und beispielsweise in einem kraft-/momentgeregelten Betrieb des Roboterarms durch manuelles Führen des Roboterarms während des Anfassens der Handauflage und/oder des Griffes und folglich durch Bewegen wenigstens eines der Glieder des Roboterarms diesen verstellen. Aufgrund der Antreibbarkeit des Zusatzabtriebsglieds, an welches das Funktionselement angekoppelt ist, kann auch das Handführungsmittel, die Handauflage bzw. der Griff aktiv angetrieben werden, um dem Benutzer, welcher das Handführungsmittel, die Handauflage bzw. den Griff anfasst bzw. umgreift, ein taktiles Feedback zu geben.

Das Handführungsmittel ermöglicht eine intuitives Handführen aller Freiheitsgrade des Roboterarms an einer großzügig dimensionierten Handauflagefläche, die jedoch anders als beim Stand der Technik, weder die Nutzlast wegen eines größeren effektiven Flanschabstands reduziert noch die distale Störkontur nachteilig beeinflusst. Diese Bedienschnittstelle ermöglicht sowohl ein direktes Handführen des Roboterarms (in einem Handführmodus) als auch (in einem anderen Modus) als Eingabeelement die Eingabe von Befehlen und Einstellungen am Roboter bzw. an der Robotersteuerung (Eingabemodus).

In einer zweiten Ausgestaltung kann das Funktionselement ein manuelles Eingabemittel sein. Das Funktionselement kann ein oder mehrere Eingabemittel aufweisen. Jedes Eingabemittel kann als ein einziges Einzel-Eingabeelement zur Steuerung einer Einzelfunktion ausgebildet sein. Alternativ kann das Eingabemittel als ein Multi-Eingabeelement zur Steuerung mehrerer Einzelfunktion ausgebildet sein oder mehrere Einzel-Eingabeelemente umfassen, wobei jedes der mehrere Einzel-Eingabeelemente zur Steuerung einer Einzelfunktion ausgebildet sein kann.

Das Funktionselement kann eine Kombination aus einer manuellen Schnittstelle, bzw. einem Handführungsmittel, einer Handauflage und/oder eines Griffes, und wenigstens eines manuelles Eingabemittels sein. Insofern kann aufgrund der Antreibbarkeit des Zusatzabtriebsglieds, an welches das Funktionselement angekoppelt ist, auch das manuelle Eingabemittel aktiv angetrieben werden, um dem Benutzer, welcher das manuelle Eingabemittel momentan betätigt, ein taktiles Feedback bei der manuellen Eingabe zu geben.

In einer dritten Ausgestaltung kann das Funktionselement ein Zusatzwerkzeug sein. Das Zusatzabtriebsglied bildet in dieser Ausgestaltung ein zusätzliches Kopplungsmittel, an dem zusätzliche Roboterwerkzeuge, die durch den Roboterarm gehalten, bewegt, geführt und gegebenenfalls auch angesteuert werden können, an dem Roboterarm befestigt werden können. Das zusätzliche Roboterwerkzeug kann beispielsweise ein zusätzlicher Greifer sein, welcher ausgebildet ist zum Ergreifen eines Objektes, das durch Bewegen des Roboterarms gehandhabt werden soll. Alternativ kann das Roboterwerkzeug auch ein zusätzliches Bearbeitungswerkzeug sein, wie beispielsweise eine Schweißzange, ein sonstiges Werkzeug, insbesondere zur mechanischen Bearbeitung oder Handhabung eines Werkstücks. Das Zusatzabtriebsglied kann einen zusätzlichen Werkzeugflansch aufweisen, der insbesondere ein zusätzlicher Flansch mit einem Flanschbild gemäß ISO 9409-1:2004-03 sein kann. Der zusätzliche Werkzeugflansch kann auch als zusätzliche mechanische Schnittstelle des Roboterarms bezeichnet werden.

Die im Folgenden beschriebenen Weiterbildungen können wahlweise im Rahmen der ersten Ausgestaltung, der zweiten Ausgestaltung und/oder der dritten Ausgestaltung zur Anwendung kommen.

Innerhalb des Handglieds kann ein Getriebe angeordnet sein, welches ausgebildet ist, das Zusatzabtriebsglied an das distale Endglied anzukoppeln, um eine Bewegung des distalen Endglieds in eine Bewegung des Zusatzabtriebsglieds umzusetzen und/oder um eine Bewegung des Zusatzabtriebsglieds in eine Bewegung des distalen Endglieds umzusetzen.

Das Getriebe kann eine einfache mechanische Koppel sein, welche die Bewegung des distale Endglieds unmittelbar in eine gleichförmige Bewegung des Zusatzabtriebsglieds umsetzt. Das Getriebe kann beispielsweise eine einfache Welle sein, in welche ein Drehmoment durch das distale Endglied eingeleitet, durch die Welle weitergeleitet und an das Zusatzabtriebsglied ausgeleitet wird.

Das Getriebe kann eine Welle umfassen, welche ausgebildet ist zur Übertragung eines Drehmoments zwischen dem Zusatzabtriebsglied und dem distalen Endglied. In einer einfachen Ausführung kann die Welle an ihrem einen Wellenende an dem distalen Endglied festgelegt sein und an ihrem gegenüberliegenden anderen Wellenende an dem Zusatzabtriebsglied festgelegt sein. So kann eine Drehbewegung des distalen Endglieds direkt in eine gleichförmige Bewegung des Zusatzabtriebsglieds umgesetzt werden. In gleicher Weise kann dann auch eine Drehbewegung des Zusatzabtriebsglieds direkt in eine gleichförmige Bewegung des distalen Endglieds umgesetzt werden, wenn an das Zusatzabtriebsglied eine manuelle Schnittstelle, bzw. eine Handauflage und/oder ein Griff angeschlossen ist, welche manuell durch die Hand eines Benutzers gedreht werden kann, um das distale Endglied dadurch manuell zu verstellen.

Das Getriebe kann aber auch wenigstens eine Übersetzungsstufe aufweisen, durch welche ein Übersetzungsverhältnis geschaffen werden kann, derart, dass trotz mechanischer Kopplung von distalem Endglied und Zusatzabtriebsglied, das Zusatzabtriebsglied bei Drehbewegung eine andere Drehzahl aufweist als die jeweilige Drehzahl des distalen Endglieds. Das Übersetzungsverhältnis kann größer als 1 sein. Alternativ kann das Übersetzungsverhältnis kleiner als 1 sein.

Das Getriebe kann eine schaltbare Kupplung umfassen, welche ausgebildet ist in einem eingerückten Zustand ein Drehmoment zwischen dem Zusatzabtriebsglied und dem distalen Endglied zu übertragen und in einem ausgerückten Zustand eine Übertragung eines Drehmoments zwischen dem Zusatzabtriebsglied und dem distalen Endglied zu unterbrechen.

Die schaltbare Kupplung kann manuell schaltbar sein. Dazu kann an dem Handglied eine Betätigungseinrichtung angeordnet sein, welche manuell, beispielsweise von einer Hand eines Benutzers, betätigt werden kann, um die Kupplung zu schalten. Die Betätigungseinrichtung kann ausgebildet sein die Kupplung mechanisch zu schalten. Alternativ oder ergänzend kann die Betätigungseinrichtung ausgebildet sein, die Kupplung durch eine Antriebseinrichtung angetrieben zu schalten, und zwar angesteuert durch die manuell zu betätigende Betätigungseinrichtung.

Alternativ kann die schaltbare Kupplung angesteuert von einer den Roboterarm ansteuernden Robotersteuerung automatisch geschalten werden.

Dem distalen Endglied kann eine erste Antriebsvorrichtung zugeordnet sein, welche ausgebildet ist zum Bewegen des distalen Endglieds und dem Zusatzabtriebsglied kann dabei eine von der ersten Antriebsvorrichtung verschiedene zweite Antriebsvorrichtung zugeordnet sein, welche ausgebildet ist zum Bewegen des Zusatzabtriebsglieds.

In einer ersten Ausführungsform kann die zweite Antriebsvorrichtung, die dem Zusatzabtriebsglied zugeordnet ist, unabhängig von der ersten Antriebsvorrichtung, die dem distalen Endglied zugeordnet ist, angesteuert werden. Ein solches Ansteuern der erste Antriebsvorrichtung und der zweiten Antriebsvorrichtung kann durch die Robotersteuerung erfolgen.

In einer zweiten Ausführungsform kann die zweite Antriebsvorrichtung, die dem Zusatzabtriebsglied zugeordnet ist, in Abhängigkeit von der ersten Antriebsvorrichtung, die dem distalen Endglied zugeordnet ist, angesteuert werden. Ein solches Ansteuern der erste Antriebsvorrichtung und der zweiten Antriebsvorrichtung kann durch die Robotersteuerung erfolgen. Insoweit kann die Robotersteuerung ausgebildet und eingerichtet sein, sowohl die erste Antriebsvorrichtung anzusteuern als auch die zweite Antriebsvorrichtung anzusteuern, derart, dass das distale Endglied und das Zusatzabtriebsglied synchrone Bewegungen ausführen. Die Robotersteuerung kann insbesondere ausgebildet und eingerichtet sein, durch das Ansteuern von distalem Endglied und/oder Zusatzabtriebsglied ein virtuelles Übersetzungsverhältnis zu simulieren, bei dem das Zusatzabtriebsglied bei Drehbewegung eine andere Drehzahl aufweist als die jeweilige Drehzahl des distalen Endglieds. Das virtuelle Übersetzungsverhältnis kann größer als 1 sein. Alternativ kann das virtuelle Übersetzungsverhältnis kleiner als 1 sein

Die erste Antriebsvorrichtung kann einen ersten Motor aufweisen und die zweite Antriebsvorrichtung kann dabei einen zweiten Motor aufweisen, wobei der erste Motor und der zweite Motor durch eine Steuervorrichtung, beispielsweise die Robotersteuerung des Roboterarms, in Abhängigkeit voneinander ansteuerbar sind.

Dem distalen Endglied kann wenigstens ein erster Stellungssensor zugeordnet sein, welche ausgebildet ist zum Erfassen der Drehstellung des distalen Endglieds und dem Zusatzabtriebsglied kann dabei wenigstens ein zweiter Stellungssensor zugeordnet sein, welche ausgebildet ist zum Erfassen der Drehstellung des Zusatzabtriebsglieds.

Der erste Stellungssensor und der zweite Stellungssensor können steuerungstechnisch mit der Steuervorrichtung bzw. mit der Robotersteuerung des Roboterarms verbunden sein, so dass die Robotersteuerung in Abhängigkeit der erfassten Sensorwerte des ersten Stellungssensors und des zweiten Stellungssensors die erste Antriebsvorrichtung und/oder die zweite Antriebsvorrichtung entsprechend dem gewünschten Verhalten des distalen Endglieds und/oder des Zusatzabtriebsglieds ansteuern kann.

Mit dem Zusatzabtriebsglied kann ein am Handglied angeordnetes Handführungsmittel verbunden sein, derart, dass durch manuelles Betätigen des Handführungsmittels das Zusatzabtriebsglied verstellbar ist und/oder durch automatisches Antreiben des Zusatzabtriebsglieds das Handführungsmittel automatisch verstellbar ist.

In einer ersten Variante des Handführungsmittels kann dieses einen am Handglied drehbar gelagerten Drehsteller aufweisen, der einen Ring mit einer Umfangsringfläche und eine von der Umfangsringfläche eingegrenzte Stirnfläche aufweist. Die Stirnfläche kann zumindest weitgehend oder vollständig flach ausgebildet sein. Die Stirnfläche des Drehstellers kann sich zumindest im Wesentlichen und genau parallel zur Flanschebene des Werkzeugflansches erstrecken. Dabei weist die Oberfläche der Stirnfläche des Drehstellers in eine zur Oberfläche des Werkzeugflansches entgegengesetzte Richtung. Eine drehbare Lagerung des Drehstellers an dem Handglied kann entweder dadurch erfolgen, dass der Drehsteller an einem Gehäusebauteil des Handglieds drehbar gelagert ist. Alternativ kann eine drehbare Lagerung des Drehstellers an dem Handglied dadurch erreicht werden, indem der Drehsteller an dem Zusatzabtriebsglied befestigt ist, wobei demgemäß das Zusatzabtriebsglied innerhalb des Handglieds drehbar gelagert ist. Der Drehsteller kann manuell lösbar und wiederaufsteckbar an dem Zusatzabtriebsglied angekoppelt sein.

In einer zweiten Variante des Handführungsmittels kann der Drehsteller eine Rasteinrichtung aufweisen, welche für gleichmäßig beabstandete Winkellagen des Drehstellers jeweils eine Raststellung vorgibt, die bei Drehen des Drehstellers erst bei Überwinden einer vorbestimmten Mindestauslösekraft verlassen werden kann, um eine benachbarte Raststellung überspringen zu können.

Das Handführungsmittel kann manuell lösbar an dem Handglied oder dem Zusatzabtriebsglied befestigt sein und das Zusatzabtriebsglied kann dabei ein Werkzeugkupplungsmittel aufweisen, an das ein Zusatzwerkzeug ankoppelbar ist, wobei in einem befestigten Zustand des Handführungsmittels an dem Handglied oder dem Zusatzabtriebsglied das Werkzeugkupplungsmittel durch das Handführungsmittel verdeckt ist und in einem entfernten Zustand des Handführungsmittels von dem Handglied oder dem Zusatzabtriebsglied das Werkzeugkupplungsmittel zum Ankoppeln eines Werkzeugs zugänglich ist.

Aufgrund des Werkzeugkupplungsmittels kann wahlweise ein Handführungsmittel oder ein Zusatzwerkzeug an dem Zusatzabtriebsglied angekoppelt werden. Ist das Zusatzwerkzeug von dem Zusatzabtriebsglied entfernt, kann das auf das Zusatzabtriebsglied aufgesteckte Handführungsmittel ergänzend ein Sicherungsmittel bilden, das ein unerwünschtes manuelles Eingreifen in das Zusatzabtriebsglied verhindert, insbesondere wenn das Zusatzabtriebsglied in Bewegung ist. Das Handführungsmittel muss dabei insoweit nicht notwendiger Weise an das Zusatzabtriebsglied angekoppelt sein, sondern kann vielmehr lediglich an einem Gehäuseabschnitt des Handglieds befestigt sein. Das Handführungsmittel hat dann auch die Funktion einer Abdeckkappe.

Das Handführungsmittel kann einen Griffabschnitt oder einen Griff mit wenigstens einem Griffabschnitt aufweisen, der zum manuellen Führen des Roboterarms mittels einer Hand eines Benutzers ausgebildet ist. Das Handführungsmittel kann demgemäß ein vorspringendes Griffglied aufweisen, welches von einer Hand eines Benutzers gegriffen werden kann, um durch Bewegen des mit der Hand erfassten Griffgliedes das Handglied des Roboterarms zu bewegen und folglich die Gelenkwinkelstellungen des Roboterarms verändern zu können.

Das Handführungsmittel kann aber auch einen Griffabschnitt aufweisen, der nicht vorspringt, sondern im Wesentlichen on einer Oberfläche des Handführungsmittels gebildet wird.

In einer ersten Variante des Griffabschnitts kann dieser von einer strukturierten Oberfläche einer Ringfläche des Handführungsmittels gebildet werden.

In einer zweiten Variante des Griffabschnitts kann die strukturierte Oberfläche von mehreren diskreten Erhebungen an der Ringfläche des Handführungsmittels gebildet werden. Die mehreren diskreten Erhebungen können gleichmäßig über den Umfang der Ringfläche hinweg verteilt angeordnet sein. Die Form und Größe der Erhebungen können unter Beachtung ergonomischer Aspekte an die durchschnittliche Form und Größe von Fingern einer Hand eines Menschen angepasst sein. So können die mehreren diskreten Erhebungen derart ausgebildet sein, dass beim Ergreifen des Griffabschnitts mit der Hand einer Person jeweils eine Erhebung sich zwischen zwei benachbarte Finger einer Hand einfügen.

In einer dritten Variante des Griffabschnitts kann die strukturierte Oberfläche von mehreren diskreten Vertiefungen in der Ringfläche des Handführungsmittels gebildet werden. Die mehreren diskreten Vertiefungen können gleichmäßig über den Umfang der Ringfläche hinweg verteilt angeordnet sein. Die Form und Größe der Vertiefungen können unter Beachtung ergonomischer Aspekte an die durchschnittliche Form und Größe von Fingern einer Hand eines Menschen angepasst sein. So können die mehreren diskreten Vertiefungen derart ausgebildet sein, dass beim Ergreifen des Griffabschnitts mit der Hand einer Person jeweils eine Fingerkuppe eines Fingers der Hand einer Person in eine Vertiefung eingreift.

Alternativ oder ergänzend zu einem Griff oder Griffabschnitt kann das Handführungsmittel ein Eingabemittel aufweisen, das zum manuellen Eingeben von Steuerbefehlen in eine den Roboterarm ansteuernde Steuervorrichtung ausgebildet ist. Das Eingabemittel kann insbesondere ein elektrisches Eingabemittel, beispielsweise ein elektrischer Schalter oder ein elektrischer Taster sein, der einen elektrischen Schaltkreis schaltet, die mit der Robotersteuerung verbunden ist. So kann von einer den Roboterarm bedienenden Person über das Eingabemittel ein Eingabesignal an die Robotersteuerung übermittelt werden. Die Robotersteuerung führt dann eine dem Eingabemittel zugeordnete Funktion aus.

In einer ersten Variante des Eingabemittels kann dieses wenigstens einen Taster oder Schalter an einer Stirnseite des Handführungsmittels umfassen.

In einer zweiten Variante des Eingabemittels kann dieses wenigstens einen, insbesondere mehrere Taster oder Schalter an einer Ringfläche des Handführungsmittels umfassen. Im Falle von mehreren Tastern oder Schaltern an der Ringfläche des Handführungsmittels können diese in gleichmäßigen Abständen voneinander über den Umfang verteilt auf einer Oberfläche der Ringfläche des Handführungsmittels angeordnet sein. Die Anordnung der mehreren Taster oder Schalter auf der Ringfläche kann auf eine Anordnung von Erhebungen und/oder Vertiefungen als Griffabschnitte des Handführungsmittels abgestimmt sein, insbesondere kann jeder Erhebung und/oder Vertiefung ein einzelner Taster oder Schalter zugeordnet sein. Alternativ kann auch nur jeder beispielsweise zweiten Erhebung und/oder Vertiefung ein einzelner Taster oder Schalter zugeordnet sein.

In einer dritten Variante des Eingabemittels kann das Handführungsmittel in axialer Richtung zu seiner Drehachse verstellbar gelagert sein und das Eingabemittel dadurch gebildet werden, dass das komplette Handführungsmittel in axialer Richtung gedrückt wird. Diesem axialen Drücken kann eine Tastfunktion zugeordnet sein, so dass ein Signal nur während der Dauer des Drückens erzeugt wird. Alternativ kann dem axialen Drücken des Handführungsmittels eine Umschaltfunktion zugeordnet sein, so dass durch einmaliges, insbesondere kurzes axiales Drücken des Handführungsmittels ein Schaltzustand aktiviert wird und bei einem nochmaligen kurzen axialen Drücken des Handführungsmittels der aktivierte Schaltzustand wieder deaktiviert wird.

In einer vierten Variante des Eingabemittels kann diesem die Funktion einer Zustimmtaste zugeordnet sein. Die Funktion in Art einer Zustimmtaste kann analog einer Zustimmtaste an einem Bedienhandgerät eines Roboters ausgeführt sein, wie dies beispielsweise in EN ISO 10218-1:2011, insbesondere in Anhang C beschrieben ist.

In einer fünften Variante des Eingabemittels kann diesem die Funktion einer Auswahltaste oder Eingabetaste (auch: Returntaste oder Entertaste) zugeordnet sein. In dieser Funktion dient das Eingabemittel als ein Bestätigungsmittel, um durch eine manuelle Bewegung mit der Hand einer Person eine steuerungstechnische Funktion der Robotersteuerung auszulösen oder eine bestimmte Auswahl aus mehreren Zustandsmöglichkeiten zu treffen, d.h. den zuvor ausgewählten Zustand zu bestätigen. Die Auswahl eines bestimmten Zustands aus mehreren Zustandsmöglichkeiten kann beispielsweise durch eine oder zwei Taster oder Schalter erfolgen, die konfiguriert sind zum Blättern bzw. Scrollen in einem Menü eines Anwenderprogramms, das mehrere Zustände zur Auswahl anzeigt.

In einer sechsten Variante des Eingabemittels kann demgemäß die wenigstens eine Taste oder Schalter ein Eingabemittel sein, durch welches Scroll-Funktion ausgeführt werden kann, so dass in einem Menü eines Anwenderprogramms, das mehrere Zustände zur Auswahl anzeigt, ein gewünschter Zustand durch einfaches oder mehrfaches Betätigen der Taste oder des Schalters angewählt werden kann.

In einer siebten Variante des Eingabemittels kann das Eingabemittel durch einen Drehsteller gebildet werden, welcher einen um die Drehachse drehbaren Kopf aufweist, der mit den Fingern einer Hand betätigt werden kann. Der Drehsteller kann in Art eines Drehschalters in mehreren diskreten mechanischen Stufen schaltbar sein oder in Art eines Potentiometers mechanisch stufenlos ausgebildet sein. Jeder diskreten Schaltstufe und/oder bestimmten Winkelstellungen des Drehstellers kann ein separater Zustand zugeordnet sein. Durch einen solchen Drehsteller kann eine Scroll-Funktion abgebildet werden, so dass in einem Menü eines Anwenderprogramms, das mehrere Zustände zur Auswahl anzeigt, ein gewünschter Zustand durch entsprechendes Drehen des Drehstellers angewählt werden kann. Ergänzend kann durch Drücken des Drehstellers eine weitere Schaltfunktion realisiert werden, beispielsweise die Funktion einer Auswahltaste oder Eingabetaste, wie in Verbindung mit der fünften Variante des Eingabemittels beschrieben. Der Drehsteller kann insoweit einen sogenannten "Jog-Dial" bilden.

Alternativ oder ergänzend zu einem Griffabschnitt und/oder einem Eingabemittel kann das Handführungsmittel wenigstens ein Anzeigemittel aufweisen, das zum optischen Anzeigen von Zuständen des Roboterarms und/oder der Steuervorrichtung an dem Handführungsmittel ausgebildet ist.

In einer ersten Variante des Anzeigemittels kann ein elektronisches Display an der Stirnseite des Handführungsmittels ausgebildet sein. Auf dem Display können Werte von vorbestimmten Zustandsarten angezeigt werden. Die jeweilige angezeigte Zustandsart kann aus einer Menge an mehreren Zustandsarten manuell ausgewählt sein. Mittels eines als Drehstellers ausgebildeten Handführungsmittels kann auch diejenige Zustandsart manuell ausgewählt werden, deren momentaner Wert an dem Anzeigemittel dann dargestellt werden kann.

In einer zweiten Variante des Anzeigemittels kann ein elektronisches Touch-Display an der Stirnseite des Handführungsmittels ausgebildet sein, das neben der Anzeigefunktion auch die Möglichkeit von manuellen Tasteingaben aufweist. Mittels des Touch-Displays können manuelle Eingaben direkt auf der Oberfläche an der Stirnseite des Handführungsmittels eingegeben werden.

Konkrete Ausführungsbeispiele der Erfindung sind in der nachfolgenden Beschreibung unter Bezugnahme auf die beigefügten Figuren näher erläutert.

Es zeigen:
- Fig. 1: einen beispielhaften Roboterarm mit sieben Gelenken und acht Gliedern, sowie mit einer die Gelenke des Roboterarms ansteuernde Robotersteuerung,
- Fig. 2 bis 4: schematische Darstellungen jeweils eines distalen Endbereichs eines beispielhaften Roboterarms mit einem erfindungsgemäßen Zusatzabtriebsglied in Form eines Handführungsmittels,
- Fig. 5: eine schematische Darstellung eines distalen Endbereichs eines distalen Endbereichs eines beispielhaf- ten Roboterarms mit einem erfindungsgemäßen Zusatzabtriebsglied in Form eines Werkzeugkupplungsmittels mit einem Zusatzwerkzeug,
- Fig. 6 und 7: je eine Schnittdarstellung durch ein Handglied eines Roboterarms und das darin gelagerte Zusatzabtriebsglied,
- Fig. 8: eine vergrößerte Teilansicht eines Handglieds des Roboterarms im Bereich des Handführungsmittels mit mehreren Eingabemitteln,
- Fig. 9: eine vergrößerte Teilansicht eines Handglieds des Roboterarms im Bereich des Handführungsmittels mit mehreren Anzeigemitteln,
- Fig. 10: eine schematische Schnittdarstellung im Bereich eines als Schaltwippe ausgebildeten Eingabemittels,
- Fig. 11: eine schematische Schnittdarstellung im Bereich eines als Taster ausgebildeten Eingabemittels, und

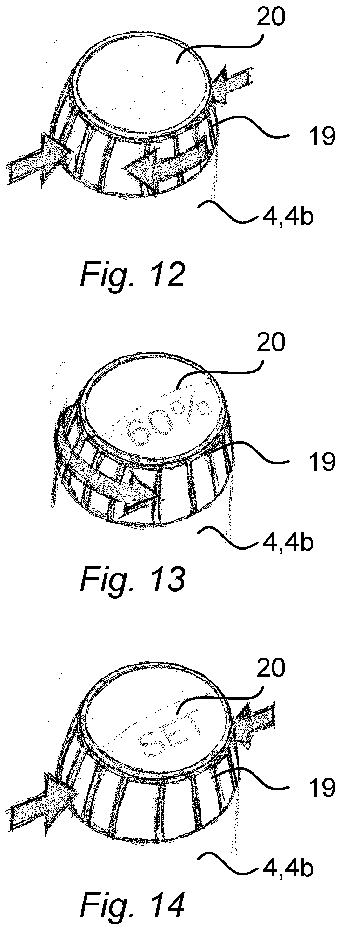

- Fig. 12 bis 14: schematische Darstellungen von Handführungsmitteln am Handglied des Roboterarms, die stirnseitig jeweils Anzeigemittel aufweisen.

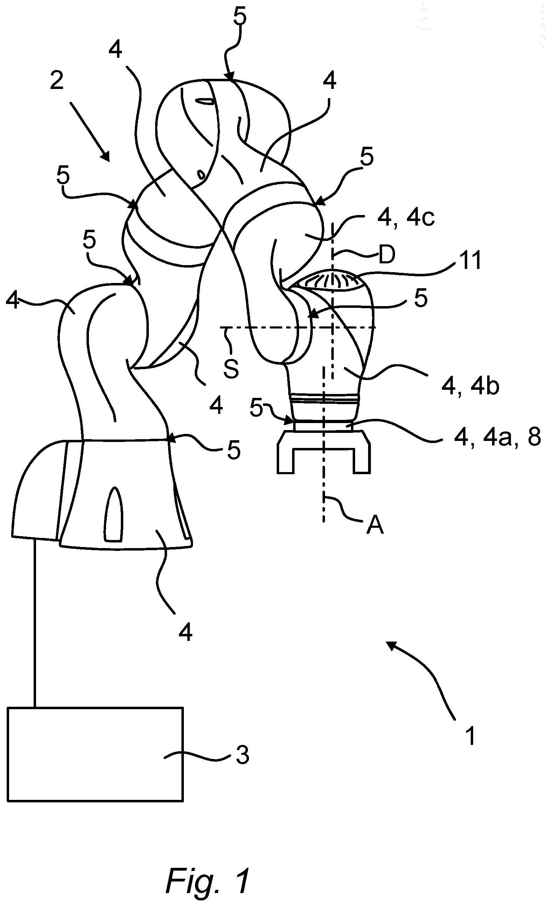

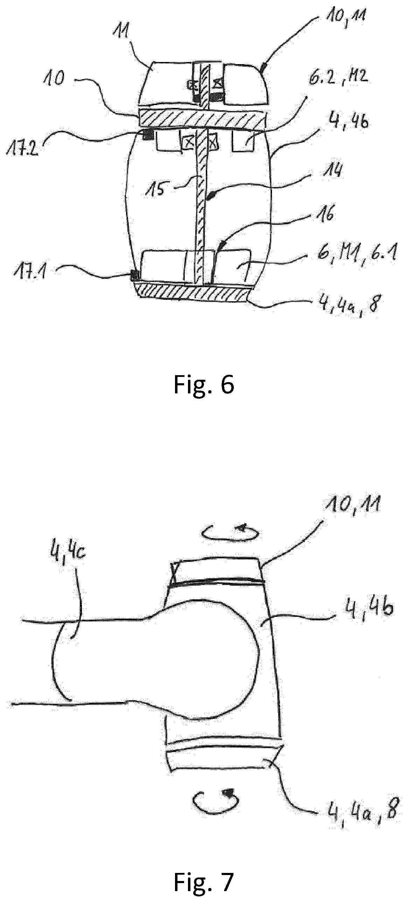

In der Fig. 1 ist ein Roboter 1 dargestellt mit einem Roboterarm 2 und einer den Roboterarm 2 ansteuernden Robotersteuerung 3. Der Roboterarm umfasst mehrere Gelenke 5 und mehreren Glieder 4, die durch die Bewegungen der Gelenke 5 des Roboterarms 2 gegeneinander verstellbar sind, wobei jedem angetriebenen Gelenk 5 eine Antriebsvorrichtung 6 zugeordnet ist und die jeweilige Antriebsvorrichtung 6 ausgebildet ist, das ihr zugeordnete Gelenk 5 des Roboterarms 2 zu verstellen und zwar durch jeweiliges automatisches Ansteuern eines Motors 7 der jeweiligen Antriebsvorrichtung 6, aufweisend ein als Werkzeugflansch 8 ausgebildetes distales Endglied 4a, ein dem distalen Endglied 4a in der kinematischen Kette der Gelenke 5 und Glieder 4 unmittelbar vorgelagertes Handglied 4b, an dem das distale Endglied 4a um eine Flanschdrehachse A drehbar gelagert ist, sowie ein am Handglied 4b um eine zur Flanschdrehachse A parallelen Drehachse D drehbar gelagertes Zusatzabtriebsglied 10 (Fig. 6), welches dem distalen Endglied 4a gegenüberliegend am Handglied 4b angeordnet ist. An dem Zusatzabtriebsglied 10 ist ein Handführungsmittel 11 angekoppelt.

Der Roboterarm 2 kann wie dargestellt eine solche mechanische Konfiguration aufweisen, dass die Flanschdrehachse A des Werkzeugflansches 8 stets parallel zur Drehachse D des Zusatzabtriebsglieds 10 und/oder des Handführungsmittels 11 verläuft, insbesondere die Flanschdrehachse A des Werkzeugflansches 8 und die Drehachse D des Zusatzabtriebsglieds 10 bzw. des Handführungsmittels 11 stets auf derselben Geraden liegen, und dabei eine Schwenkachse S, um welche das Handglied 4b an einem dem Handglied 4b in der kinematischen Kette unmittelbar vorgelagerten Armglied 4c des Roboterarms 2 drehbar gelagert ist, stets senkrecht zur Flanschdrehachse A des Werkzeugflansches 8 und zur Drehachse D des Zusatzabtriebsglieds 10 bzw. des Handführungsmittels 11 orientiert angeordnet ist.

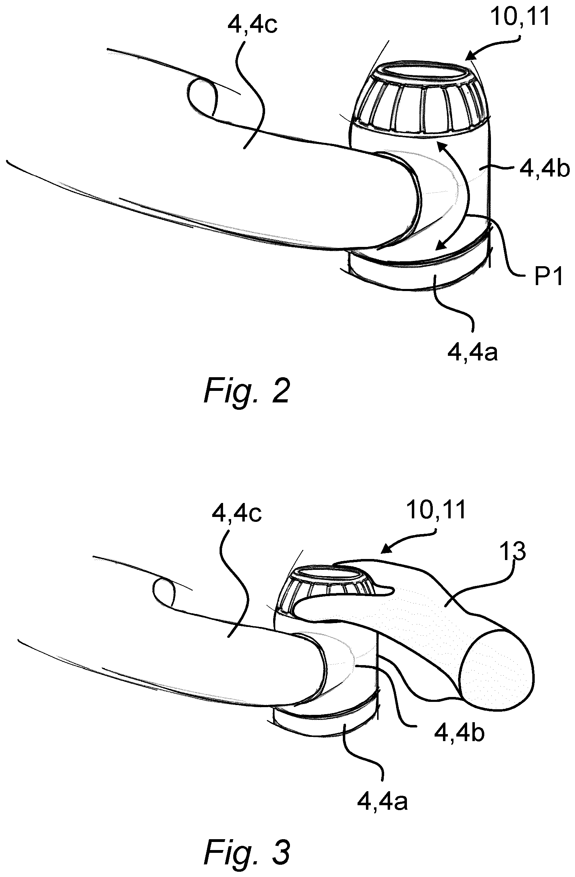

Die Fig. 2 zeigt in einer hinsichtlich der Form des Roboterarms etwas abgewandelten Weise in einer Teildarstellung das Handglied 4b, wie es um die Schwenkachse S in Pfeilrichtung P1 geschwenkt bzw. gedreht werden kann. Dem Werkzeugflansch 8 gegenüberliegend ist das Zusatzabtriebsglieds 10 und das Handführungsmittel 11 angeordnet.

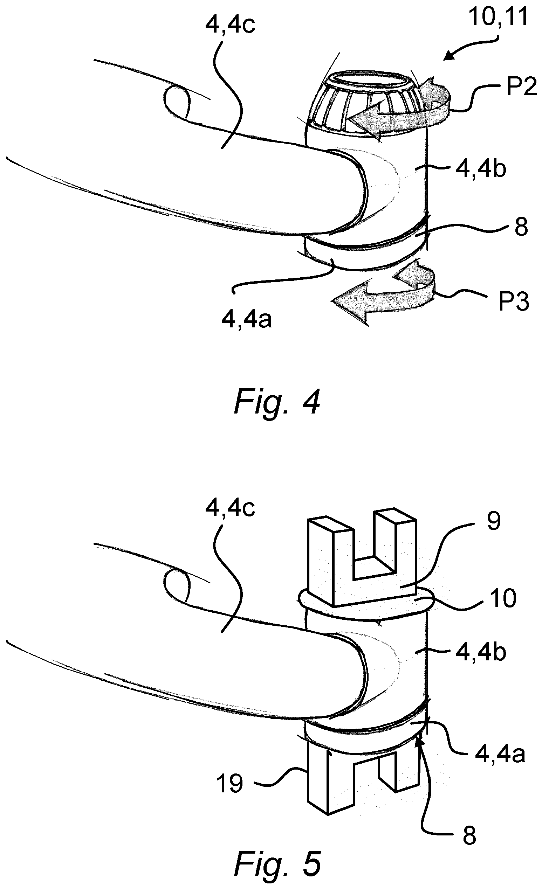

Das Handführungsmittel 11 kann von dem Handglied 4b abnehmbar ausgeführt sein, so dass an dem Handglied 4b bzw. an dem Zusatzabtriebsglied 10 statt des Handführungsmittels 11 ein Zusatzwerkzeug 9 angekoppelt werden kann. Dies ist insbesondere in Fig. 5 näher dargestellt.

Das Handführungsmittel 11 kann jedoch, wie dies in Fig. 3 angedeutet ist, Griffabschnitte 12 aufweisen, die wie dargestellt an einer Ringfläche des Handführungsmittel 11 angeordnet sind, so dass das Handführungsmittel 11 mit den Fingern einer Hand 13 einer Person gegriffen und gedreht werden kann. Alternativ oder ergänzend zu einem manuellen Drehen des Handführungsmittels 11 kann ganz allgemein der Roboterarm 2 an dem Handführungsmittel 11 in seinen Gelenkwinkelstellungen durch Führen mittels der Hand 13 verstellt werden.

Wie die Fig. 4 aufzeigt, kann das Handführungsmittel 11 an dem Zusatzabtriebsglied 10 derart konfiguriert sein, dass durch ein Drehen des Handführungsmittels 11 um die Pfeilrichtung P2 der Werkzeugflansch 8 eine entsprechend gekoppelte Drehbewegung um die Pfeilrichtung P3 ausführt. Die Drehung des Handführungsmittels 11 kann in eine identische Drehbewegung des Werkzeugflansches 8 umgesetzt werden, oder eine Übersetzung in der Drehzahl bzw. der Winkelgeschwindigkeit aufweisen. Es ist auch möglich, dass der Werkzeugflansche 8 eine zur Drehung des Handführungsmittels 11 entgegengesetzte Drehbewegung ausführt, allerdings in diesem Fall dennoch in Abhängigkeit des Verstellens des Handführungsmittels 11, wahlweise synchron oder asynchron.

Die Fig. 6 zeigt, dass innerhalb des Handglieds 4b ein Getriebe 14 angeordnet sein kann, welches ausgebildet ist, das Zusatzabtriebsglied 10 an das distale Endglied 4a anzukoppeln, um eine Bewegung des distalen Endglieds 4a in eine Bewegung des Zusatzabtriebsglieds 10 umzusetzen und/oder um eine Bewegung des Zusatzabtriebsglieds 10 in eine Bewegung des distalen Endglieds 4a umzusetzen. Das Getriebe 14 kann wie dargestellt eine Welle 15 umfassen, welche ausgebildet ist zur Übertragung eines Drehmoments zwischen dem Zusatzabtriebsglied 10 und dem distalen Endglied 4a bzw. dem Werkzeugflansch 8. Das Getriebe 14 kann eine schaltbare Kupplung 16 umfassen, welche ausgebildet ist in einem eingerückten Zustand ein Drehmoment zwischen dem Zusatzabtriebsglied 10 und dem distalen Endglied 4a zu übertragen und in einem ausgerückten Zustand eine Übertragung eines Drehmoments zwischen dem Zusatzabtriebsglied 10 und dem distalen Endglied 4a zu unterbrechen. Als Antriebsvorrichtung 6 kann ein Motor M1 in das Handglied 4b integriert sein.

Insofern kann dem distalen Endglied 4a eine erste Antriebsvorrichtung 6.1 zugeordnet sein, welche ausgebildet ist zum automatischen Bewegen des distalen Endglieds 4a, wobei dem Zusatzabtriebsglied 10 bzw. dem Handführungsmittel 11 eine von der ersten Antriebsvorrichtung 6.1 verschiedene zweite Antriebsvorrichtung 6.2 zugeordnet ist, welche ausgebildet ist zum Bewegen des Zusatzabtriebsglieds 10 bzw. des Handführungsmittels 11. Folglich kann das Handführungsmittel 11 dadurch eine Force-Feedback-Einrichtung aufweisen. Die erste Antriebsvorrichtung 6.1 kann insoweit einen ersten Motor M1 aufweisen und die zweite Antriebsvorrichtung 6.2 einen zweiten Motor M2 aufweisen, wobei der erste Motor M1 und der zweite Motor M2 beispielsweise durch die Steuervorrichtung 3 in Abhängigkeit voneinander ansteuerbar sein können.

Dem distalen Endglied 4a, d.h. dem Werkzeugflansch 8 kann wenigstens ein erster Stellungssensor 17.1 zugeordnet sein, welche ausgebildet ist zum Erfassen der Drehstellung des distalen Endglieds 4a und dem Zusatzabtriebsglied 10 kann wenigstens ein zweiter Stellungssensor 17.2 zugeordnet sein, welche ausgebildet ist zum Erfassen der Drehstellung des Zusatzabtriebsglieds 10.

In der Fig. 7 ist schematisch aufgezeigt, dass aufgrund der schenkbaren Lagerung des Handglieds 4b an dem Armglied 4c um die Schwenkachs S wahlweise das distale Endglied 4a, d.h. der Werkzeugflansch 8 nach unten weisend ausgerichtet werden kann, wobei das Zusatzabtriebsglied 10 bzw. das Handführungsmittel 11 nach oben weist, oder es kann das distale Endglied 4a, d.h. der Werkzeugflansch 8 nach oben weisend ausgerichtet werden, wobei das Zusatzabtriebsglied 10 bzw. das Handführungsmittel 11 dann nach unten weist.

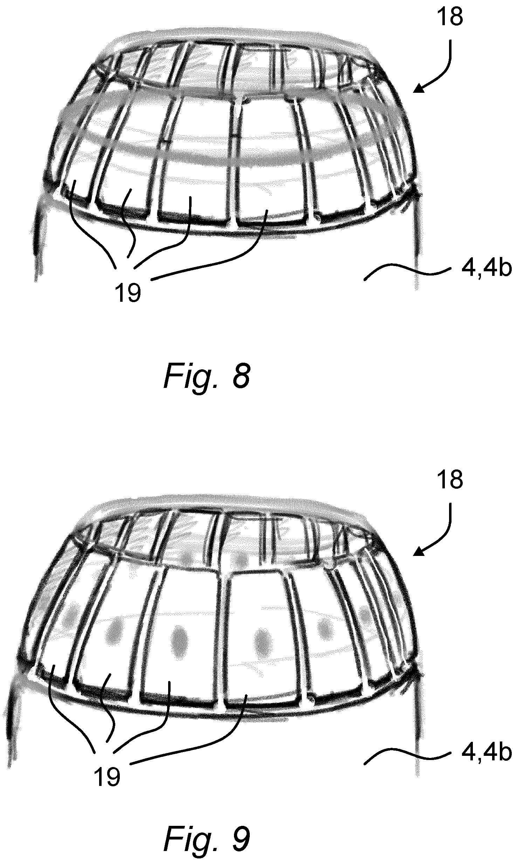

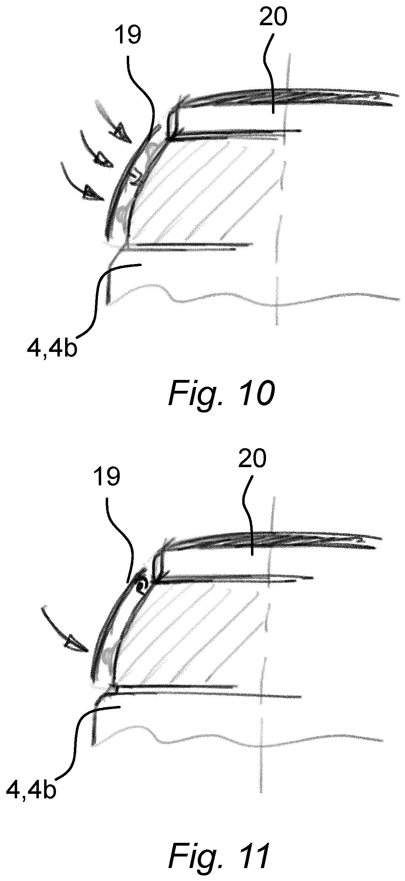

Wie die Fig. 8 und Fig. 9 aufzeigen, kann das Handführungsmittel 11 ein oder mehrere Eingabemittel 18 aufweisen, die zum manuellen Eingeben von Steuerbefehlen in eine den Roboterarm 2 ansteuernde Steuervorrichtung 3 ausgebildet sind. Die Fig. 10 zeigt beispielhaft ein als Schaltwippe ausgebildetes Eingabemittel 18 und Fig. 11 zeigt beispielhaft ein als Taster ausgebildetes Eingabemittel 18.

Das kombinierte Handführungsmittel 11 und Eingabemittel, welches im Schwenkgehäuse der Roboterhand 4b zwischen der letzten und der vorletzten distalen Achse des Roboterarms 2 positioniert ist, kann demgemäß eine Auflagefläche für die Hand 13 bilden, durch welche der Benutzer ergonomisch günstig den Roboterarm handführen kann und die ersten n-1 Achsen des n-achsigen Roboterarms direkt kraftgeregelt bewegen kann.

Das vorzugsweise ringförmige drehbare Eingabefeld kann dazu dienen, die Bewegung des distale Endglieds 4a, d.h. des Werkzeugflansches 8, vom Handglied 4b aus digital und direkt vorzugeben, wobei optional ein entsprechendes Feedback an den Nutzer über die Hand 18 zurückübermittelt werden kann. Das Bedienen der letzten Drehachse wird durch die folgenden Punkte als besonders direkt und natürlich empfunden.

Der Ring kann durchdrehend in Art eines Jogwheels ausgebildet sein und muss somit keine zentrierende Mittelstellung besitzen. Zwecks präziser und bewusster Eingabe kann der Ring reibungsbehaftet sein, d.h. ein gedämpftes Verhalten aufweisen oder eine segmentweise Rasterung umfassen, die der Nutzer beim Drehen haptisch wahrnimmt. Dieses rückhaltende Moment kann in einer vorteilhaften Variante angesteuert veränderbar sein, um ein direktes Kraft-Feedback der realen letzten Achse zu erhalten, beispielsweise im Falle einer Kollision des Werkzeugs 19 (Fig. 5) oder beim Erreichen der Achsgrenzen der Gelenke des Roboterarms 2.

Das Handführungsmittel 11 bzw. das Eingabemittel kann in Art eines Zustimmtasters konfiguriert sein. Das vorgestellte Bedienkonzept stellt einen ganzheitlichen Ansatz dar, bei dem der Nutzer in der Lage sein soll mit nur einer Hand den Roboterarm 2 handzuführen. Daher kann je nach Robotertyp, Gefährdungspotential und Vorschriften auch ein Zustimmtaster zum Handverfahren erforderlich machen. Damit eine Zustimmung bei gleichzeitiger Handführung möglich ist, kann beispielsweise ein Schalt- bzw. Tastelement auf dem Eingabering platziert werden. Durch leichtes Zusammendrücken des Ringes beispielsweise kann die Fahrfreigabe erteilt werden, durch Verdrehen kann die letzte Achse (Gelenk des Roboterarms 2) angesteuert und durch Verschieben der Handauflage, der restliche Roboter bewegt werden. Ebenso sind auch berührend wirkende Taster, beispielsweise kapazitiv oder induktiv, möglich.

Als Ausführungsformen, wie in Fig. 8 und Fig. 9 beispielhaft aufgezeigt ist, können ein oder mehrere zusammenhängende Schaltflächen 19 in Ringform, z.B. verlegte Schaltleisten oder einzelne Schaltelemente, wie Taster, vorgesehen sein, die beispielsweise auch unter einem Ring von Tastsegmenten platziert sein können und von diesem bei Druck betätigt werden können.

Die Schaltflächen 19 können dabei einzeln schiebend analog von Tasten einer Computer-Tastatur oder einzeln kippend (Fig. 10 und Fig. 11) aufgehängt sein und auf den Taster wirken. Ebenso ist auch eine Ausführung möglich, bei denen die Schaltflächen 19 zusammenhängend aus einem nachgiebigen Material, z.B. Kunststoff wie Elastomer, hergestellt sind und sowohl die Verbindungen untereinander als auch die Führungsfunktionen und die Schaltflächen 19 durch eine geeignete Formgebung und eine gezielte Steifigkeitsverteilung direkt integriert werden.

Das Handführungsmittel 11 kann wenigstens ein Anzeigemittel 20 aufweisen, das zum optischen Anzeigen von Zuständen des Roboterarms 2 und/oder der Steuervorrichtung 3 an dem Handführungsmittel 11 ausgebildet ist.

Das Anzeigemittel 20 kann beispielsweise einen LED-Ring umfassen. Ein beispielsweise segmentweise ansteuerbarer LED-Ring kann die Eingaben über den Bedienring visualisiert. Die Leuchtmittel des LED-Ring können beispielsweise einzeln oder in Gruppen jeweils einzelnen Eingabemittels bzw. Tastern zugeordnet sein. An einem Display als Anzeigemittel 20 lassen sich 0-100% Einstellungen, z.B. Geschwindigkeitswerte, und/oder Winkeleinstellungen, z.B. Achswinkelwerte sehr anschaulich darstellen. Ebenso sind allgemeine Informationen wie beispielsweise ein Status gut sichtbar anzeigbar.

Ein zentrales Display kann optional oder alternativ vorgesehen sein, welches wesentliche Informationen anzeigen kann, und beispielsweise in Kombination mit LED-Ring und Bedienring sowie Zustimmtaster ein neuartiges, intuitives aber auch sehr puristisches Bedienkonzept darstellt.

Wird das Bedienelement im Eingabemodus benutzt, kann mit dem Einstell-Ring z.B. durch ein Menü auf dem Display gescrollt oder ein Wert eingestellt oder eine Funktion ausgewählt werden. Eine kurze Betätigung des Zustimmtasters wählt den Programm- oder Menüpunkt aus. Ebenso kann auch die "zurück Option" gewählt werden oder eine Gestensteuerung gewählt werden, z.B. die Roboterstruktur kurz berühren bedeutet dann ein "zurück".

Wird das Bedienelement im Handführmodus betrieben, kann die Bewegung des Ringes im Normalfall 1:1 zur Flanschachse durchgeleitet werden. Bei Bedarf kann eine "digitale Übersetzung" auch die Bewegung ins Langsame oder ins Schnelle ändern.

## Patentansprüche

1. Roboterarm mit mehreren Gelenken (5) und mehreren Gliedern (4), die durch die Bewegungen der Gelenke (5) des Roboterarms (2) gegeneinander verstellbar sind, wobei jedem angetriebenen Gelenk (5) eine Antriebsvorrichtung (6) zugeordnet ist und die jeweilige Antriebsvorrichtung (6) ausgebildet ist, das ihr zugeordnete Gelenk (5) des Roboterarms (2) zu verstellen und zwar durch jeweiliges automatisches Ansteuern eines Motors (7) der jeweiligen Antriebsvorrichtung (6), aufweisend ein als Werkzeugflansch (8) ausgebildetes distales Endglied (4a), ein dem distalen Endglied (4a) in der kinematischen Kette der Gelenke (5) und Glieder (4) unmittelbar vorgelagertes Handglied (4b), an dem das distale Endglied (4a) um eine Flanschdrehachse (A) drehbar gelagert ist, sowie ein am Handglied (4b) um eine zur Flanschdrehachse (A) parallelen Drehachse (D) drehbar gelagertes Zusatzabtriebsglied (10), welches dem distalen Endglied (4a) gegenüberliegend am Handglied (4b) angeordnet ist, **dadurch gekennzeichnet, dass** dem distalen Endglied (4a) eine erste Antriebsvorrichtung (6.1) zugeordnet ist, welche ausgebildet ist zum Bewegen des distalen Endglieds (4a) und dem Zusatzabtriebsglied (10) eine von der ersten Antriebsvorrichtung (6.1) verschiedene zweite Antriebsvorrichtung (6.2) zugeordnet ist, welche ausgebildet ist zum Bewegen des Zusatzabtriebsglieds (10).

2. Roboterarm nach Anspruch 1, **dadurch gekennzeichnet, dass** innerhalb des Handglieds (4b) ein Getriebe (14) angeordnet ist, welches ausgebildet ist, das Zusatzabtriebsglied (10) an das distale Endglied (4a) anzukoppeln, um eine Bewegung des distalen Endglieds (4a) in eine Bewegung des Zusatzabtriebsglieds (10) umzusetzen und/oder um eine Bewegung des Zusatzabtriebsglieds (10) in eine Bewegung des distalen Endglieds (4a) umzusetzen.

3. Roboterarm nach Anspruch 2, **dadurch gekennzeichnet, dass** das Getriebe (14) eine Welle (15) umfasst, welche ausgebildet ist zur Übertragung eines Drehmoments zwischen dem Zusatzabtriebsglied (10) und dem distalen Endglied (4a).

4. Roboterarm nach Anspruch 2 oder 3, **dadurch gekennzeichnet, dass** das Getriebe (14) eine schaltbare Kupplung (16) umfasst, welche ausgebildet ist in einem eingerückten Zustand ein Drehmoment zwischen dem Zusatzabtriebsglied (10) und dem distalen Endglied (4a) zu übertragen und in einem ausgerückten Zustand eine Übertragung eines Drehmoments zwischen dem Zusatzabtriebsglied (10) und dem distalen Endglied (4a) zu unterbrechen.

5. Roboterarm nach Anspruch 1, **dadurch gekennzeichnet, dass** die erste Antriebsvorrichtung (6.1) einen ersten Motor (M1) aufweist und die zweite Antriebsvorrichtung (6.2) einen zweiten Motor (M2) aufweist, wobei der erste Motor (M1) und der zweite Motor (M2) durch eine Steuervorrichtung (3) in Abhängigkeit voneinander ansteuerbar sind.

6. Roboterarm nach Anspruch 5, **dadurch gekennzeichnet, dass** dem distalen Endglied (4a) wenigstens ein erster Stellungssensor (17.1) zugeordnet ist, welche ausgebildet ist zum Erfassen der Drehstellung des distalen Endglieds (4a) und dem Zusatzabtriebsglied (10) wenigstens ein zweiter Stellungssensor (17.2) zugeordnet ist, welche ausgebildet ist zum Erfassen der Drehstellung des Zusatzabtriebsglieds (10).

7. Roboterarm nach einem der Ansprüche 1 bis 6, **dadurch gekennzeichnet, dass** mit dem Zusatzabtriebsglied (10) ein am Handglied (4b) angeordnetes Handführungsmittel (11) verbunden ist, derart, dass durch manuelles Betätigen des Handführungsmittels (11) das Zusatzabtriebsglied (10) verstellbar ist und/oder durch automatisches Antreiben des Zusatzabtriebsglieds (10) das Handführungsmittel (11) automatisch verstellbar ist.

8. Roboterarm nach Anspruch 7, **dadurch gekennzeichnet, dass** das Handführungsmittel (11) manuell lösbar an dem Handglied (4b) oder dem Zusatzabtriebsglied (10) befestigt ist und das Zusatzabtriebsglied (10) ein Werkzeugkupplungsmittel aufweist, an das ein Zusatzwerkzeug (9) ankoppelbar ist, wobei in einem befestigten Zustand des Handführungsmittels (11) an dem Handglied (4b) oder dem Zusatzabtriebsglied (10) das Werkzeugkupplungsmittel durch das Handführungsmittel (11) verdeckt ist und in einem entfernten Zustand des Handführungsmittels (11) von dem Handglied (4b) oder dem Zusatzabtriebsglied (10) das Werkzeugkupplungsmittel zum Ankoppeln eines Zusatzwerkzeugs (9) zugänglich ist.

9. Roboterarm nach Anspruch 7 oder 8, **dadurch gekennzeichnet, dass** das Handführungsmittel (11) einen Griffabschnitt aufweist, der zum manuellen Führen des Roboterarms (2) mittels einer Hand (13) eines Benutzers ausgebildet ist, und wenigstens ein Eingabemittel (18) aufweist, das zum manuellen Eingeben von Steuerbefehlen in eine den Roboterarm (2) ansteuernde Steuervorrichtung (3) ausgebildet ist und wenigstens ein Anzeigemittel (20) aufweist, das zum optischen Anzeigen von Zuständen des Roboterarms (2) und der Steuervorrichtung (3) an dem Handführungsmittel (11) ausgebildet ist.

## Claims

1. Robot arm comprising several joints (5) and several links (4) which can be adjusted relative to each other by the movements of the joints (5) of the robot arm (2), wherein a drive device (6) is assigned to each driven joint (5) and the respective drive device (6) is designed to adjust the joint (5) of the robot arm (2) assigned to it, specifically by respective automatic actuation of a motor (7) of the respective drive device (6), comprising a distal end link (4a) which is designed as a tool flange (8), a hand link (4b) which is arranged directly upstream of the distal end link (4a) in the kinematic chain of the joints (5) and links (4) and on which the distal end link (4a) is rotatably mounted about a flange rotation axis (A), and an additional output link (10) which is rotatably mounted on the hand link (4b) about a rotation axis (D), which is parallel to the flange rotation axis (A), and is arranged on the hand link (4b) so as to lie opposite the distal end link (4a), **characterized in that** a first drive device (6.1) is assigned to the distal end link (4a) and is designed to move the distal end link (4a) and a second drive device (6.2) that is different from the first drive device (6.1) is assigned to the additional output link (10), the second drive device being designed to move the additional output link (10).

2. Robot arm according to Claim 1, **characterized in that** a gear mechanism (14) is arranged within the hand link (4b) and is designed to couple the additional output link (10) to the distal end link (4a) in order to convert a movement of the distal end link (4a) into a movement of the additional output link (10) and/or to covert a movement of the additional output link (10) into a movement of the distal end link (4a).

3. Robot arm according to Claim 2, **characterized in that** the gear mechanism (14) comprises a shaft (15) which is designed to transmit a torque between the additional output link (10) and the distal end link (4a).

4. Robot arm according to Claim 2 or 3, **characterized in that** the gear mechanism (14) comprises a switchable clutch (16) which is designed to transmit a torque between the additional output link (10) and the distal end link (4a) in an engaged state and to interrupt transmission of a torque between the additional output link (10) and the distal end link (4a) in a disengaged state.

5. Robot arm according to Claim 1, **characterized in that** the first drive device (6.1) has a first motor (M1) and the second drive device (6.2) has a second motor (M2), wherein the first motor (M1) and the second motor (M2) can be controlled depending on each other by a control device (3).

6. Robot arm according to Claim 5, **characterized in that** at least one first position sensor (17.1) is assigned to the distal end link (4a) and is designed to detect the rotational position of the distal end link (4a) and at least one second position sensor (17.2) is assigned to the additional output link (10) and is designed to detect the rotational position of the additional output link (10).

7. Robot arm according to any of Claims 1 to 6, **characterized in that** a manual guiding means (11) arranged on the hand link (4b) is connected to the additional output link (10) in such a way that the additional output link (10) can be adjusted by manually actuating the manual guiding means (11) and/or the manual guiding means (11) can be automatically adjusted by automatically driving the additional output link (10).

8. Robot arm according to Claim 7, **characterized in that** the manual guiding means (11) is manually detachably attached to the hand link (4b) or the additional output link (10) and the additional output link (10) has a tool coupling means to which an additional tool (9) can be coupled, wherein the tool coupling means is hidden by the manual guiding means (11) in a state in which the manual guiding means (11) is attached to the hand link (4b) or the additional output link (10), and the tool coupling means is accessible for coupling an additional tool (9) in a state in which the manual guiding means (11) is removed from the hand link (4b) or the additional output link (10).

9. Robot arm according to Claim 7 or 8, **characterized in that** the manual guiding means (11) has a grip portion which is designed for a user's hand (13) to manually guide the robot arm (2) and has at least one input means (18) which is designed for manually entering control commands into a control device (3) controlling the robot arm (2) and has at least one display means (20) which is designed for visually displaying states of the robot arm (2) and the control device (3) on the manual guiding means (11).

## Revendications

1. Bras de robot comprenant de multiples articulations (5) et de multiples liaisons (4) qui peuvent être ajustées les unes par rapport aux autres au moyen des mouvements des articulations (5) du bras de robot (2), un dispositif d'entraînement (6) étant associé à chaque articulation entraînée (5), et le dispositif d'entraînement (6) respectif étant conçu pour ajuster l'articulation (5) qui lui est associée du bras de robot (2), à savoir au moyen d'un actionnement automatique respectif d'un moteur (7) du dispositif d'entraînement (6) respectif, comportant une liaison d'extrémité distale (4a) qui est conçue sous la forme d'une bride d'outil (8), une liaison de main (4b) qui est disposée directement en amont de la liaison d'extrémité distale (4a) dans la chaîne cinématique des articulations (5) et des liaisons (4) et sur laquelle la liaison d'extrémité distale (4a) est montée de manière rotative autour d'un axe de rotation de bride (A), et une liaison de sortie supplémentaire (10) qui est montée de manière rotative sur la liaison de main (4b) autour d'un axe de rotation (D) qui est parallèle à l'axe de rotation de bride (A) et qui est disposée sur la liaison de main (4b) de manière à se trouver en regard de la liaison d'extrémité distale (4a), **caractérisé en ce qu'**un premier dispositif d'entraînement (6.1) est associé à la liaison d'extrémité distale (4a) et est conçu pour déplacer la liaison d'extrémité distale (4a), et **en ce qu'**un deuxième dispositif d'entraînement (6.2) différent du premier dispositif d'entraînement (6.1) est associé à la liaison de sortie supplémentaire (10) et est conçu pour déplacer la liaison de sortie supplémentaire (10).

2. Bras de robot selon la revendication 1, **caractérisé en ce qu'**un engrenage (14) est disposé à l'intérieur de la liaison de main (4b) et est conçu pour accoupler la liaison de sortie supplémentaire (10) à la liaison d'extrémité distale (4a) afin de convertir un mouvement de la liaison d'extrémité distale (4a) en un mouvement de la liaison de sortie supplémentaire (10) et/ou afin de convertir un mouvement de la liaison de sortie supplémentaire (10) en un mouvement de la liaison d'extrémité distale (4a).

3. Bras de robot selon la revendication 2, **caractérisé en ce qu'**un engrenage (14) comprend un arbre (15) qui est conçu pour transmettre un couple entre la liaison de sortie supplémentaire (10) et la liaison d'extrémité distale (4a).

4. Bras de robot selon la revendication 2 ou 3, **caractérisé en ce qu'**un engrenage (14) comprend un accouplement embrayable (16) qui est conçu pour transmettre un couple entre la liaison de sortie supplémentaire (10) et la liaison d'extrémité distale (4a) dans un état embrayé et pour interrompre une transmission d'un couple entre la liaison de sortie supplémentaire (10) et la liaison d'extrémité distale (4a) dans un état débrayé.

5. Bras de robot selon la revendication 1, **caractérisé en ce que** le premier dispositif d'entraînement (6.1) comporte un premier moteur (M1) et le deuxième dispositif d'entraînement (6.2) comporte un deuxième moteur (M2), le premier moteur (M1) et le deuxième moteur (M2) pouvant être commandés l'un en fonction de l'autre par un dispositif de commande (3).

6. Bras de robot selon la revendication 5, **caractérisé en ce qu'**au moins un premier capteur de position (17.1) est associé à la liaison d'extrémité distale (4a), lequel est conçu pour détecter la position de rotation de la liaison d'extrémité distale (4a), et **en ce qu'**au moins un deuxième capteur de position (17.2) est associé à la liaison de sortie supplémentaire (10), lequel est conçu pour détecter la position de rotation de la liaison de sortie supplémentaire (10).

7. Bras de robot selon l'une des revendications 1 à 6, **caractérisé en ce qu'**un moyen de guidage manuel (11) disposé sur la liaison de main (4b) est relié à la liaison de sortie supplémentaire (10), de telle sorte que, par actionnement manuel du moyen de guidage manuel (11), la liaison de sortie supplémentaire (10) soit réglable et/ou que, par entraînement automatique de la liaison de sortie supplémentaire (10), le moyen de guidage manuel (11) soit réglable automatiquement.

8. Bras de robot selon la revendication 7, **caractérisé en ce que** le moyen de guidage manuel (11) est fixé de manière amovible manuellement à la liaison de main (4b) ou à la liaison de sortie supplémentaire (10), et **en ce que** la liaison de sortie supplémentaire (10) comporte un moyen de couplage d'outil auquel un outil supplémentaire (9) peut être accouplé, le moyen de couplage d'outil étant recouvert par le moyen de guidage manuel (11) dans un état dans lequel le moyen de guidage manuel (11) est fixé à la liaison de main (4b) ou à la liaison de sortie supplémentaire (10), et le moyen de couplage d'outil étant accessible pour l'accouplement d'un outil supplémentaire (9) dans un état dans lequel le moyen de guidage manuel (11) est retiré de la liaison de main (4b) ou de la liaison de sortie supplémentaire (10).

9. Bras de robot selon la revendication 7 ou 8, **caractérisé en ce que** le moyen de guidage manuel (11) comporte une partie de préhension qui est conçue pour le guidage manuel du bras de robot (2) au moyen d'une main (13) d'un utilisateur, et comporte au moins un moyen de saisie (18) qui est conçu pour saisir manuellement des ordres de commande dans un dispositif de commande (3) commandant le bras de robot (2), et comporte au moins un moyen d'affichage (20) qui est conçu pour l'affichage optique d'états du bras de robot (2) et du dispositif de commande (3) sur le moyen de guidage manuel (11).
